# EUROPÄISCHE PATENTSCHRIFT

(11) **EP 3 029 886 B1**
(45) Veröffentlichungstag und Bekanntmachung des Hinweises auf die Patenterteilung: **27.06.2018**
(21) Anmeldenummer: 15020239.8
(22) Anmeldetag: 01.12.2015
(51) Int. Cl.: H04L 12/28

(54) **MIGRATION VON STEUERUNGSELEMENTEN BEI EINER GEBÄUDESTEUERUNG**
MIGRATION OF CONTROL ELEMENTS IN A BUILDING CONTROL SYSTEM
MIGRATION D'ÉLÉMENTS DE COMMANDE DE GESTION DE BÂTIMENT

(30) Priorität: 01.12.2014 DE 102014117589
(43) Veröffentlichungstag der Anmeldung: 08.06.2016
(73) Patentinhaber: Deutsche Telekom AG, 53113 Bonn (DE)
(72) Erfinder: Hund, Martin, 56370 Rettert (DE); Unterschütz, Thomas, 64331 Weiterstadt (DE); Sinning, Thorsten, 52080 Aachen (DE)
(74) Vertreter: Raible Deissler Lehmann Patentanwälte PartG mbB

(56) Entgegenhaltungen:
- US-A1- 2005 044 225
- US-A1- 2010 332 629
- US-A1- 2012 089 726

## Beschreibung

Die vorliegende Erfindung betrifft ein Verfahren zur Steuerung mindestens einer Vorrichtung in mindestens einem Gebäude sowie ein Steuerungssystem.

Zum Steuern, d. h. insbesondere Fernsteuern, von Vorrichtungen in Gebäuden, wie bspw. einer Beleuchtungs- und/oder Sicherheitselektronik, werden traditionellerweise Verfahren verwendet, die entweder auf einem zentralen Server oder einem lokalen Gateway ausgeführt bzw. initiiert werden.

Bei einer Steuerung über einen zentralen Server werden jeweilige zur Steuerung jeweiliger Vorrichtungen verwendete Applikationen zentral über einen Server verwaltet und ausgeführt. Ein zentraler Server als Verwaltungseinheit bietet Vorteile, wie bspw. eine effiziente Verwaltung jeweiliger Software. Dies bedeutet, dass bspw. beim Aufspielen von Updates lediglich eine zentrale Instanz durch einen Techniker zu betreuen ist, um eine Vielzahl von Vorrichtungen in einer Vielzahl von Gebäuden gemäß den jeweiligen Updates zu steuern. Insbesondere für Nutzer, die eine Vielzahl von Gebäuden verwalten, können zentrale Server eine erhebliche Erleichterung sein, da ein aufwendiges lokales Konfigurieren von Hardware entfällt.

Andererseits sind auch Nachteile beim Betrieb von zentralen Servern, wie bspw. Verbindungsabrisse, bekannt, die zu einem Kontrollverlust über jeweilige Vorrichtungen führen und teils erhebliche Schäden bedingen können.

Über ein Gateway, das lokal in einem jeweiligen zu verwaltenden Gebäude angeordnet ist, kann im Gegensatz zu einem zentralen Server, direkt, d. h. insbesondere durch physikalische Leitungen, und mit entsprechend kurzer Latenz gesteuert werden. Ein lokales Gateway ermöglicht eine Steuerung jeweiliger Vorrichtungen auch bei unterbrochener Kommunikationsverbindung nach außen, d. h. bspw. bei einer unterbrochenen Internetverbindung. Jedoch sind Gateways untereinander nur schwer zu koordinieren und erfordern eine regelmäßige Wartung. Werden Gateways nicht regelmäßig gewartet, d. h. bspw. mit aktueller Software versorgt, können insbesondere beim Betrieb von Sicherheitssystemen Sicherheitslücken entstehen.

Die Druckschrift US 2012/089726 A1 offenbart ein Verfahren zum Migrieren einer Applikation von einer ersten Serveranordnung zu einer zweiten Serveranordnung.

In der Druckschrift US 2010/332629 A1 wird ein Verfahren zum Übertragen einer Applikation von einem Verwaltungsserversystem zu einem Cloud-Server offenbart.

Vor diesem Hintergrund wird ein Verfahren mit den Merkmalen des Anspruchs 1 und ein Steuerungssystem mit den Merkmalen des Anspruchs 11 vorgestellt.

Ausführungsformen ergeben sich aus der Beschreibung und den abhängigen Ansprüchen.

Es wird somit ein Verfahren zur Steuerung mindestens einer Vorrichtung in mindestens einem Gebäude vorgestellt, bei dem die mindestens eine Vorrichtung über mindestens eine von einem Steuerungssystem umfasste Applikation angesteuert wird, wobei das Steuerungssystem einen Server und eine Anzahl Gateways umfasst und wobei die mindestens eine Applikation in Abhängigkeit mindestens einer im Voraus bereitzustellenden Übertragungsregel wahlweise von dem Server zu einem jeweiligen Gateway übertragen und auf dem jeweiligen Gateway zur unmittelbaren Steuerung der mindestens einen Vorrichtung verwendet wird oder umgekehrt von einem jeweiligen Gateway zu dem Server übertragen und auf dem Server zur mittelbaren Steuerung der mindestens einen Vorrichtung verwendet wird.

Das vorgestellte Verfahren dient insbesondere zum Ansteuern und Verwalten von Vorrichtungen in Gebäuden.

Unter einer Vorrichtung ist im Kontext der vorliegenden Erfindung jedes Objekt in einem Gebäude zu verstehen, dass mittels elektrischer Signale zu steuern, d. h. in seinen Eigenschaften zu ändern ist.

Unter einer Applikation ist im Kontext der vorliegenden Erfindung eine Logik zur Umsetzung einer bestimmten Funktionalität mindestens einer Vorrichtung zu verstehen. Applikationen können auch mehrere Vorrichtungen, wie bspw. Heizungen, Alarmanlagen, Rollläden oder Lichter steuern. Insbesondere ist vorgesehen, dass jeweilige Applikationen jeweilige Vorrichtungen über Sensoren und/oder Aktuatoren steuern, die letztendlich einen jeweiligen Hausautomatisierungsbefehl umsetzen.

Unter einer Verwaltungsregel (appliance rule) ist im Kontext der vorgestellten Erfindung eine Logik zu verstehen, die es einer Verwaltungsinstanz ermöglicht, bspw. konkurrierende Anforderungen von verschiedenen Applikationen zu koordinieren. Dazu kann eine Verwaltungsregel insbesondere eine Priorisierungsregel umfassen. Dies bedeutet, dass bspw. eine Verwaltungsregel "Bei einem Einbruch sollen alle Lampen im Haus eingeschaltet werden" mit höherer Priorität umgesetzt wird als eine Verwaltungsregel "Nachts sollen alle Lampen ausgeschaltet sein".

Unter einer Übertragungsregel (migration rule) ist im Kontext der vorgestellten Erfindung eine Logik zum Entscheiden über einen Verbleib bei oder eine Übertragung einer Applikation weg von einem jeweiligen Quellsystem zu verstehen. Eine Übertragungsregel kann insbesondere durch einen Nutzer oder eine zu übertragende Applikation selbst vorgegeben sein. Eine Übertragungsregel kann von diversen Akteuren spezifiziert bzw. vorgegeben werden, wie bspw. einem Hersteller einer jeweiligen Applikation, der eine allgemeine Übertragungsregel vorgibt. Weiterhin können Übertragungsregeln durch einen Nutzer selbst spezifiziert und an seine Bedürfnisse angepasst werden, wobei auch denkbar ist, dass ein Serviceberater zur Umsetzung von Bedürfnissen des Nutzers entsprechende Übertragungsregeln vorgibt. Ebenfalls ist es möglich, dass Übertragungsregeln durch eine Übertragungsregelverwaltungseinheit (migration rule engine), den zentralen Server oder jedes weitere technische Element einer zu regelnden Vorrichtung spezifiziert werden. So kann es bspw. für eine Applikation zum Schalten einer Lichtanlage für ein großes Kaufhaus vorteilhaft sein, direkt auf einem lokalen Gateway ausgeführt zu werden, um individuelle Einschaltzeiten schnell, d. h. mit geringer Latenz, umzusetzen, während eine Applikation zur Steuerung einer Lichtanlage eines Wohnhausblocks besser zentral auf einem Server ausgeführt wird, um verschiedene Wohneinheiten des Wohnblocks zu koordinieren.

Mittels des vorgestellten Verfahrens ist es möglich, Applikationen zur Steuerung einer jeweiligen Vorrichtung zentral zu verwalten und, bei Bedarf, lokal auszuführen. Dazu ist vorgesehen, dass ein mehrstufiges Gebäudeautomatisierungssystem mit einem zentralen Server und mindestens einem lokalen Gateway in einem jeweiligen Gebäude verwendet wird. Durch Verwendung des zentralen Servers zur Verwaltung jeweiliger Software, d. h. bspw. von Applikationen, ist es möglich, Updates oder andere Verwaltungsdaten zentral aufzuspielen und diese an das mindestens eine Gateway, in der Regel an jeweilige Gateways zu übertragen, so dass eine lokale Wartung jeweiliger Gateways entfällt. Weiterhin ermöglicht eine Verwendung lokaler Gateways eine von einer Kommunikationsverbindung zu dem zentralen Server weitestgehend unabhängige Steuerung jeweiliger Vorrichtungen über ein lokales Ausführen jeweiliger Applikationen. Dies bedeutet, dass eine Applikation stets an einem für die Ausführung der Applikation bestmöglich geeigneten Ort, d. h. auf dem zentralen Server oder einem lokalen Gateway, bspw. in Abhängigkeit einer Funktionalität der Applikation, ausgeführt werden kann.

Um auch bei einem Kommunikationsausfall eine Kontrolle jeweiliger Vorrichtungen in einem von dem Kommunikationsausfall betroffenen Gebäude zu ermöglichen, ist vorgesehen, dass jeweilige Applikationen in Abhängigkeit einer im Voraus bereitzustellenden Übertragungsregel auf ein jeweiliges Gateway übertragen und dort bei Bedarf, d. h. in Abhängigkeit der Übertragungsregel und unter Berücksichtigung einer entsprechenden Verwaltungsregel, lokal ausgeführt werden. Dabei ist vorgesehen, dass eine jeweilige Applikation dort ausgeführt wird bzw. an die Verwaltungsinstanz übertragen wird, die für eine Funktionalität der jeweiligen Applikation am besten geeignet ist, d. h. die Funktionalität der jeweiligen Applikation bspw. durch ihre Verortung in einem Gebäude am besten unterstützt.

Solange eine Kommunikationsverbindung zwischen dem Server und einem jeweiligen Gateway besteht, ist erfindungsgemäß vorgesehen, dass jeweilige Applikationen zur Steuerung jeweiliger Vorrichtungen auf das jeweilige Gateway übertragen und dort bei Bedarf ausgeführt werden. Dies bedeutet, dass Verwaltungshandlungen, wie bspw. Wartungshandlungen zum Aufspielen eines Updates, die eine Vielzahl von Gateways betreffen, zentral auf dem Server ausgeführt werden können, so dass eine lokale Wartung entfällt.

Das vorgestellte Verfahren stellt, wie voranstehend erläutert, zwei Wege bereit, über die eine Applikation zur Steuerung einer jeweiligen Vorrichtung ausgeführt werden kann. Der erste Weg führt über den zentralen Server, der jeweilige Applikationen ausführt und über eine Kommunikationsleitung, wie bspw. das Internet oder ein Drahtlosnetzwerk, mit jeweiligen Gateways und entsprechend mit jeweiligen Vorrichtungen kommuniziert. Der zweite Weg führt über ein jeweiliges lokales Gateway, das die jeweilige Applikation bzw. Applikationen von dem zentralen Server empfangen hat und die jeweilige Applikation bzw. Applikationen unabhängig von dem zentralen Server lokal ausführt und jeweilige Vorrichtungen entsprechend unabhängig von dem Server steuert.

Das vorgestellte Verfahren ermöglicht es, eine Wartung, wie bspw. ein Softwareupdate, schnell und effizient für eine Vielzahl von Gateways durchzuführen und ggf. an einem jeweiligen Gateway vorgenommene Einstellungen auf weitere Gateways zu übertragen und dort je nach gewünschter Funktionalität auszuführen.

Insbesondere ist in Ausgestaltung vorgesehen, dass eine jeweilige Applikation sowohl auf dem zentralen Server als auch auf einem jeweiligen Gateway zur Verfügung steht und in Abhängigkeit einer jeweiligen Verwaltungsregel, die bspw. durch die jeweilige Applikation vorgegeben und bei einer jeweiligen Verwaltungsregelverwaltungsinstanz registriert wird, auf dem Server oder dem Gateway ausgeführt wird. Dies bedeutet, dass die jeweilige Applikation in doppelter Ausführung, d. h. auf dem Server und, vorinstalliert, auf dem Gateway, vorliegen kann, so dass eine aufwendige Datenübermittlung von bspw. Software-Artefakten der jeweiligen Applikation bei einer Übertragung der jeweiligen Applikation auf den Server oder das Gateway vermieden werden können. Eine Übertragung der jeweiligen Applikation erfolgt bei einer vorinstallierten Applikation schnell und einfach durch eine Übermittlung eines Steuerbefehls zur Aktivierung sowie ggf. auf einem Quellsystem spezifizierter Verwaltungsregeln.

In einer möglichen Ausgestaltung des vorgestellten Verfahrens ist vorgesehen, dass der zentrale Server ein "Cloud-server" ist, der virtuell in einem Speicher eines physikalischen Servers ausgeführt wird.

Um eine jeweilige Applikation zu verwalten, ist vorgesehen, dass die Applikation zwischen dem Server und jeweiligen Gateways migrieren kann, d. h. dass die Applikation insbesondere komplett von dem Server zu einem jeweiligen Gateway bzw. von dem jeweiligen Gateway zu dem Server übertragen werden kann. Mittels einer Migration, d. h. Übertragung, einer jeweiligen Applikation ist es möglich, eine Steuerung einer jeweiligen Vorrichtung zwischen Server und Gateway zu übertragen und, je nach Bedarf, zentral oder lokal auszuführen.

Das vorgestellte Verfahren ermöglicht es, mehrere Gebäude zentral zu verwalten und entsprechende Vorrichtungen aufeinander abgestimmt zu steuern, sowie, für den Fall eines Ausfalls von einzelnen Komponenten eines entsprechenden Steuerungssystems, eine Funktionsfähigkeit des Steuerungssystems durch lokale Ausführungen einer entsprechenden Applikation auf jeweiligen Gateways aufrechtzuerhalten.

Weiterhin ermöglicht das vorgestellte Verfahren, eine Übertragung lokaler Einstellungen, d. h. bspw. durch einen Nutzer vorgenommener Einstellungen einer Vorrichtung oder einer Applikation auf einem Gateway, auf den Server und/oder weitere Gateways von bspw. weiteren Häusern.

In einer weiteren möglichen Ausgestaltung des vorgestellten Verfahrens ist vorgesehen, dass die mindestens eine Applikation in Abhängigkeit der im Voraus bereitzustellenden Übertragungsregel von dem Server zu einem jeweiligen Gateway übertragen und dort zur direkten, d. h. bspw. kabellosen Ansteuerung der mindestens einen Vorrichtung verwendet wird.

Um eine Übertragung einer jeweiligen Applikation zwischen dem Server und jeweiligen Gateways zu ermöglichen, ist vorgesehen, dass ein Übertragungsverfahren mit insbesondere vier Übertragungsschritten durchgeführt wird. In einem ersten Übertragungsschritt erfolgt eine Initialisierung, die mindestens einmal durchgeführt werden muss, um weitere Übertragungsschritte durchzuführen, wobei zwischen der Initialisierung und einem weiteren Übertragungsschritt eine beliebige Zeitspanne liegen kann.

Zur Initialsierung werden alle Programme bzw. Programmteile, die für die jeweilige Applikation von Relevanz sein könnten, auf einem Quellsystem, wie bspw. dem Server oder einem jeweiligen Gateway ausgeführt, d. h. in Betrieb genommen. Dabei werden jeweilige Verwaltungsregeln der jeweiligen Applikation bei einer Verwaltungsregelinstanz (appliance rule engine) des Quellsystems registriert. Weiterhin werden Artefakte der jeweiligen Applikation, wie bspw. verschiedene Softwareversionen, in einem Speicher (software repository) des Quellsystems hinterlegt.

Ferner ist es zur Initialisierung erforderlich, dass sich jeweilige Gateways bzw. Server bei einer Topologieverwaltungsinstanz (Topologie manager) des Quellsystems als jeweilige potentielle Zielsysteme für eine Übertragung der jeweiligen Applikation registrieren. Es ist auch denkbar, dass die Topologieverwaltungsinstanz potentielle alternative Zielsysteme, an die die Applikation ggf. ebenfalls zu übertragen ist, bspw. aufgrund von Vorwissen selbst benennt.

Weiterhin ist denkbar, dass die Topologieverwaltungsinstanz die jeweilige Applikation verwaltet. Die Verwaltung umfasst insbesondere eine Registrierung der jeweiligen Applikation bei der Topologieverwaltungsinstanz, wobei auch eine Registrierung der jeweiligen Applikation bei einer weiteren Verwaltungsinstanz, wie bspw. einer Übertragungsverwaltungsinstanz (migration manager) erfolgen kann. Die Registrierung der jeweiligen Applikation bei einer jeweiligen Instanz umfasst insbesondere ein Eintragen von jeweiligen Regeln, d. h. von Übertragungsregeln bei einer Übertragungsregelverwaltungsinstanz (migration rule engine) bzw. von Verwaltungsregeln bei einer Verwaltungsregelverwaltungsintanz (appliance rule engine) des Quellsystems.

Es ist denkbar, dass die Übertragungsverwaltungsinstanz (migration manager) des Quellsystems sich proaktiv bei der Topologieverwaltungsinstanz über verfügbare Zielsysteme informiert und diese protokolliert, um die Übertragung der jeweiligen Applikation bspw. um weitere Zielsysteme zu erweitern.

In einem zweiten Übertragungsschritt ist vorgesehen, dass die Übertragungsregelverwaltungsinstanz des Quellsystems basierend auf in einem Speicher des Quellsystems hinterlegten und während des Initialisierungsschritts registrierten Übertragungsregeln, eine Notwendigkeit zur Übertragung der jeweiligen Applikation oder eines Teils der jeweiligen Applikation feststellt. Kriterien für ein Einleiten einer Übertragung können bspw. ein Überschreiten einer Latenz einer Verbindung, eine Bewegung von Nutzern, ein Über- oder Unterschreiten einer übertragenen Datenmenge, eine Veränderung in einer Kritikalität einer Funktionalität einer Ausfallsicherheit sowie jedes weitere Kriterium zum Betrieb eines Gebäudeautomatisierungssystems sein.

Stellt die Übertragungsregelverwaltungsinstanz des Quellsystems eine Notwendigkeit zur Übertragung der jeweiligen Applikation fest, ist vorgesehen, dass die Übertragungsregelverwaltungsinstanz des Quellsystems die Übertragungsverwaltungsinstanz des Quellsystems informiert, die letztlich die Entscheidung zur Übertragung trifft.

In einem dritten Übertragungsschritt ist vorgesehen, dass die Übertragungsverwaltungsinstanz des Quellsystems die Übertragungsverwaltungsinstanz des Zielsystems kontaktiert und alle zur Übertragung der jeweiligen Applikation benötigten Informationen, d.h. bspw. ein Software-Artefakt der jeweiligen Applikation und ggf. erforderliche Zusatzinformationen, an die Übertragungsverwaltungsinstanz des Zielsystems überträgt. Derartige Informationen zur Übertragung der jeweiligen Applikation umfassen in der Regel mindestens eine Zieladresse und ein zu übertragendes Softwareartefakt sowie ggf. Konfigurationsinformationen. In Ausgestaltung ist ferner denkbar, dass Informationen zu noch zu bearbeitenden Aufträgen aus einem jeweiligen Quellsystem von den für die Übertragung benötigten Informationen umfasst sind.

Bei der Übertragung der Informationen an die Übertragungsverwaltungsinstanz des Zielsystems kann die Übertragungsverwaltungsinstanz des Zielsystems ggf. jeweilige zu übertragende Artefakte, wie bspw. Softwareversionen, identifizieren. Entsprechende Informationen bzw. Daten werden in einen Speicher des Zielsystems geladen.

Nachdem alle Daten in den Speicher des Zielsystems geladen wurden, startet die Übertragungsverwaltungsinstanz des Zielsystems die übertragene Applikation. Es ist denkbar, dass beim Starten der Applikation auf dem Zielsystem ein aktueller Stand der Applikation auf dem Quellsystem abgerufen wird, um Zielkonflikte durch ggf. noch abzuarbeitende Aufträge der Applikation auf dem Quellsystem zu vermeiden.

Es ist weiterhin vorgesehen, dass sich die übertragene Applikation bei der Übertragungsverwaltungsinstanz des Zielsystems für eine ggf. später vorgesehene weitere Übertragung registriert, wobei die Übertragungsverwaltungsinstanz des Zielsystems weitere Zielsysteme bei der Topologieverwaltungsinstanz erfrägt. Ferner registriert die Applikation ihre Verwaltungsregeln bei der Verwaltungsregelverwaltungsinstanz des Zielsystems, dass im Falle einer weiteren Übertragung als neues Quellsystem agiert.

Die Topologieverwaltungsinstanz kann zentral bspw. auf einem Server oder lokal an einer beliebigen Stelle eines jeweiligen Gebäudeautomatisierungssystems ausgeführt werden.

Es ist denkbar, dass die Verwaltungsregeln einer jeweiligen Applikation spezifizieren, wann und ob ein Abgleich mit einem zentralen Server erfolgt, so dass die Applikation stets auf einem aktuellen Softwarestand gehalten wird.

In einem vierten Übertragungsschritt wird optional eine Steuerung jeweiliger Vorrichtungen von der Übertragungsverwaltungsinstanz des Quellsystems an die Übertragungsverwaltungsinstanz des Zielsystems übergeben und an die auf dem Zielsystem bereits gestartete Applikation weitergereicht. Anschließend wird die Applikation auf dem Quellsystem angewiesen, ihre Arbeit einzustellen, d. h. zu stoppen, wobei vorgesehen sein kann, dass die Applikation letzte Aufträge abarbeitet und anschließend beendet wird. Nach der Beendigung der Applikation auf dem Quellsystem werden die Verwaltungsregeln der Applikation bei der Verwaltungsregelverwaltungsinstanz des Quellsystems de-registriert, d. h. bspw. mittels der Verwaltungsregelinstanz des Quellsystems gelöscht, wodurch der Übertragungsprozess beendet wird.

In einer möglichen Ausgestaltung des vorgestellten Verfahrens ist vorgesehen, dass eine zugrundliegende Migrationstechnologie auf einer OSGi-basierten Softwareplattform basiert.

Es ist ferner denkbar, dass der Speicher des Quellsystems sich außerhalb des Quellsystems an einer beliebigen Stelle eines entsprechenden Gebäudeautomatisierungssystems befindet, wobei auch der Speicher zentral oder verteilt organisiert sein kann.

In einer weiteren möglichen Ausgestaltung des vorgestellten Verfahrens ist vorgesehen, dass die Übertragung von Informationen aus dem Speicher des Quellsystems in den Speicher des Zielsystems im Rahmen einer Vorinstallation, unabhängig von einem tatsächlichen Übertragungsvorgang einer jeweiligen Applikation, erfolgt.

In einer weiteren möglichen Ausgestaltung des vorgestellten Verfahrens ist vorgesehen, dass das Übertragen der mindestens einen Applikation zu dem mindestens einen Gateway und/oder eine Verwendung der Applikation zur Steuerung der mindestens einen Vorrichtung dynamisch in Abhängigkeit der mindestens einen Übertragungsregel erfolgt.

Da sich Übertragungsregeln ändern können, ist vorgesehen, dass ein Übertragungsverfahren zum Übertragen einer jeweiligen Applikation dynamisch in Abhängigkeit aktueller Übertragungsregeln durchgeführt wird.

Unter einer dynamischen Übertragung ist im Kontext der vorgestellten Erfindung eine automatische, spontane und zu einer Laufzeit eines entsprechenden Systems durchgeführte Übertragung von Daten bzw. Softwareartefakten einer jeweiligen Applikation zu verstehen. Dies bedeutet, dass eine dynamische Übertragung ohne menschlichen Eingriff abläuft, und eine übertragene Applikation nur noch in einer an einem für eine Funktionalität der Applikation günstigen Ort gestartet werden muss, ohne dass eine Vorinstallation erforderlich ist. Alternativ ist jedoch auch eine Vorinstallation mit einer ggf. in Abhängigkeit einer Übertragungsregel vorzunehmenden Aktivierung möglich.

In einer möglichen Ausgestaltung des vorgestellten Verfahrens ist vorgesehen, dass die mindestens eine Applikation eine durch einen Nutzer vorgegebene Konfiguration zur Steuerung der mindestens einen Vorrichtung umfasst.

Durch das vorgestellte Verfahren ist es neben einer Sicherung einer Funktionalität eines Gebäudeautomatisierungssystems, d. h. eines Steuerungssystems, möglich, individuelle Konfigurationen, die bspw. durch einen Nutzer an einem bestimmten Gebäude vorgenommen wurden, auf weitere Gebäude bzw. deren Gateways zu übertragen und dadurch als Standard zu verwenden, wobei der Standard auch an eine Anwesenheit bzw. einen Zustand des Nutzers, wie eine Körpertemperatur, ermittelt über biometrische Messungen mit einem Temperatursensor, gekoppelt sein kann.

Unter einem Gebäudeautomatisierungssystem ist im Kontext der vorliegenden Erfindung ein Steuerungssystem zur Steuerung von Vorrichtungen, wie bspw. Sensoren oder Aktuatoren, in Gebäuden, insbesondere auch von biometrischen Sensoren zur Vermessung von Nutzern innerhalb eines Gebäudes, wie sie bspw. im Bereich der elektronischen Gesundheitsüberwachung üblich sind, zu verstehen.

In einer weiteren möglichen Ausgestaltung des vorgestellten Verfahrens ist vorgesehen, dass für den Fall einer Aktualisierung einer jeweiligen Applikation auf dem Server, der Server eine aktualisierte Version der jeweiligen Applikation automatisch an alle Gateways, an die die jeweilige Applikation bereits übertragen wurde, überträgt, d. h. kopiert.

In einer weiteren möglichen Ausgestaltung des vorgestellten Verfahrens ist vorgesehen, dass der Server auf einer mobilen Recheneinheit eines Nutzers ausgeführt wird.

Um ein Update effizient auf verschiedene Gateways zu verteilen, ist vorgesehen, dass eine entsprechend aktualisierte Softwareversion, als Softwareartefakt einer jeweiligen Applikation, auf alle relevanten Gateways im Rahmen einer Vorinstallation, d. h. vor einer Aktivierung der jeweiligen Applikation auf einem jeweiligen Gateway, von dem zentralen Server übertragen wird.

In einer möglichen Ausgestaltung des vorgestellten Verfahrens ist vorgesehen, dass eine Verwaltungsregelverwaltungsinstanz Anforderungen von verschiedenen Applikationen auf einem Server oder einem Gateway gemäß einer durch eine jeweilige Applikation vorgegebenen Verwaltungsregel koordiniert.

Um einen Betrieb verschiedener Applikationen auf verschiedenen Gateways zu verwalten und entsprechend zu koordinieren, ist vorgesehen, dass eine zu übertragende Applikation jeweilige Verwaltungsregeln selbst definiert bzw. umfasst und an eine Verwaltungsregelverwaltungsinstanz eines jeweiligen Zielsystems rückmeldet, so dass die Verwaltungsregeln durch die Verwaltungsregelverwaltungsinstanz analysiert und interpretiert werden können. Anhand der Verwaltungsregeln kann bspw. eine Priorisierung einer jeweiligen Applikation gegenüber weiteren Applikationen geregelt werden.

Ferner betrifft die vorliegende Erfindung ein Steuerungssystem mit einem Server und einer Anzahl Gateways zur Steuerung mindestens einer Vorrichtung in mindestens einem Gebäude, wobei das Steuerungssystem dazu konfiguriert ist, die mindestens eine Vorrichtung über mindestens eine von dem Steuerungssystem umfasste Applikation anzusteuern und wobei das Steuerungssystem weiterhin dazu konfiguriert ist, die mindestens eine Applikation in Abhängigkeit mindestens einer im Voraus bereitzustellenden Übertragungsregel wahlweise von dem Server zu einem jeweiligen Gateway zu übertragen und die mindestens eine Applikation von dem jeweiligen Gateway aus zur unmittelbaren Steuerung der mindestens einen Vorrichtung zu verwenden oder umgekehrt, die mindestens eine Applikation von einem jeweiligen Gateway zu dem Server zu übertragen und auf dem Server zur mittelbaren Steuerung der mindestens einen Vorrichtung zu verwenden.

Das vorgestellte Steuerungssystem dient insbesondere zur Ausführung des vorgestellten Verfahrens.

Eine Übertragungsregel spezifiziert eine für eine Funktionalität einer jeweiligen Applikation in einer jeweiligen Situation am besten geeignete Verortung, d. h. ob die jeweilige Applikation in einer bestimmten Situation besser lokal auf einem bestimmten Gateway oder zentral auf dem Server ausgeführt werden soll. So kann eine Übertragungsregel bspw. während einer ausreichenden Beleuchtung eines Gebäudes durch Sonnenlicht zentral auf dem Server ausgeführt werden, um eine Einspeisung von durch Sonnenkollektoren erbrachte elektrische Energie in ein Elektrizitätsnetz zu verwalten. Bei Dunkelheit hingegen kann es für eine Funktionalität zur Wartung der Sonnenkollektoren förderlich sein, die Applikation lokal auf einem entsprechenden Gateway auszuführen.

In einer möglichen Ausgestaltung des vorgestellten Steuerungssystems ist vorgesehen, dass das Steuerungssystem auf dem Server und auf einem jeweiligen Gateway je mindestens eine Verwaltungsinstanz zum Verwalten von für eine Übertragung der mindestens einen Applikation von dem Server zu dem jeweiligen Gateway bzw. eine Übertragung von dem jeweiligen Gateway zu dem Server benötigter Prozesse sowie je eine Übertragungsregelinstanz umfasst, die dazu konfiguriert ist, auf dem Server und/oder dem jeweiligen Gateway jeweilige von jeweiligen Verwaltungsregeln umfasste Parameter zu überwachen und ggf. eine Entscheidung zum Übertragen der mindestens einen Applikation auf ein weiteres Gateway gemäß der mindestens einen Übertragungsregel zu treffen und/oder die mindestens eine Applikation auf dem jeweiligen Gateway zu aktivieren, und wobei das Steuerungssystem weiterhin auf dem Server und auf dem jeweiligen Gateway je eine Topologieverwaltungsinstanz umfasst, die alle potentiellen Zielsysteme kennt, die für eine Übertragung der mindestens einen Applikation in Frage kommen.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in den Zeichnungen schematisch dargestellt und wird im Folgenden unter Bezugnahme auf die Zeichnungen ausführlich beschrieben.
Figur 1 zeigt eine schematische Darstellung eines auf einem Gateway basierenden Hausautomatisierungssystems gemäß dem Stand der Technik.
Figur 2 zeigt eine schematische Darstellung eines auf einem zentralen Server basierenden Hausautomatisierungssystems gemäß dem Stand der Technik.
Figur 3 zeigt eine schematische Darstellung einer möglichen Ausgestaltung des vorgestellten Steuerungssystems.
Figur 4 zeigt eine schematische Darstellung einer Übertragung von Applikationen gemäß einer möglichen Ausgestaltung des vorgestellten Verfahrens.
Figur 5 zeigt einen Überblick über verschiedene Verfahrensschritte zum Übertragen einer Applikation gemäß einer weiteren möglichen Ausgestaltung des vorgestellten Verfahrens.

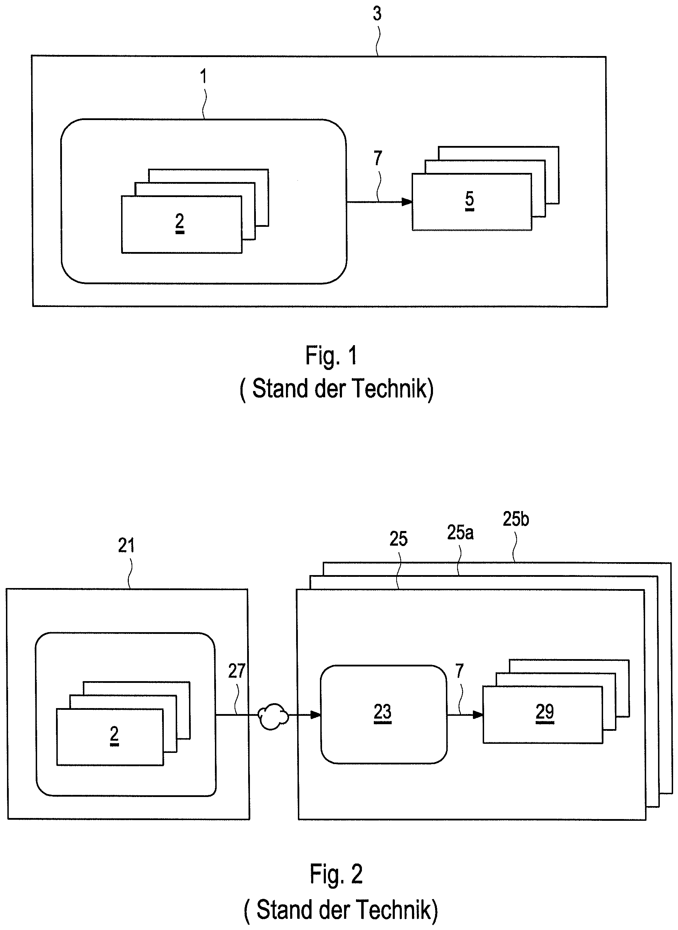

In Figur 1 ist ein Hausautomatisierungsgateway 1 dargestellt, wie es aus dem Stand der Technik bekannt ist, das lokal von einem Haus 3 umfasste Vorrichtungen 5 steuert. Dazu ist das Hausautomatisierungsgateway 1 über Kabel oder eine Drahtlosschnittstelle mit den Vorrichtungen 5 verbunden und übermittelt über die Kabel oder die Drahtlosschnittstelle jeweilige durch Applikationen 2 erzeugte Steuerbefehle, wie durch Pfeil 7 angedeutet. Infolge der Übermittlung mittels Kabeln werden die jeweiligen Steuerbefehle sehr schnell, d. h. mit einer geringen Latenz, an die Vorrichtungen 5 übertragen, so dass die Vorrichtungen 5 entsprechend schnell ihre Eigenschaften in Abhängigkeit der Steuerbefehle ändern.

In Figur 2 ist ein zentraler Server 21 dargestellt, der von einem physikalischen Server bspw. als virtueller Server ausgeführt wird.

Der Server 21 steht über eine Kommunikationsverbindung über Kabel oder eine Drahtlosschnittstelle, bspw. über das Internet, in Kontakt mit einer Hausautomatisierungsbridge 23 in einem Haus 25, wie durch Pfeil 27 angedeutet. Die Hausautomatisierungsbridge 23 wandelt von dem Server 21 empfangene Signale in Steuerungsbefehle um und übermittelt diese an Vorrichtungen 29. Sobald die Kommunikationsverbindung, wie sie durch Pfeil 27 angedeutet ist, gestört ist, kann der Server 21 keine Signale mehr an die Hausautomatisierungsbridge 23 übermitteln, so dass der Server 21 keinerlei Kontrolle mehr über die Vorrichtungen 29 hat.

Der Server 21 kann über die Kommunikationsverbindung, wie sie durch Pfeil 27 angedeutet ist, beliebig viele weitere Häuser 25a, 25b ansteuern und entsprechende Hausautomatisierungsbridges 23 bzw. Vorrichtungen 29 regeln.

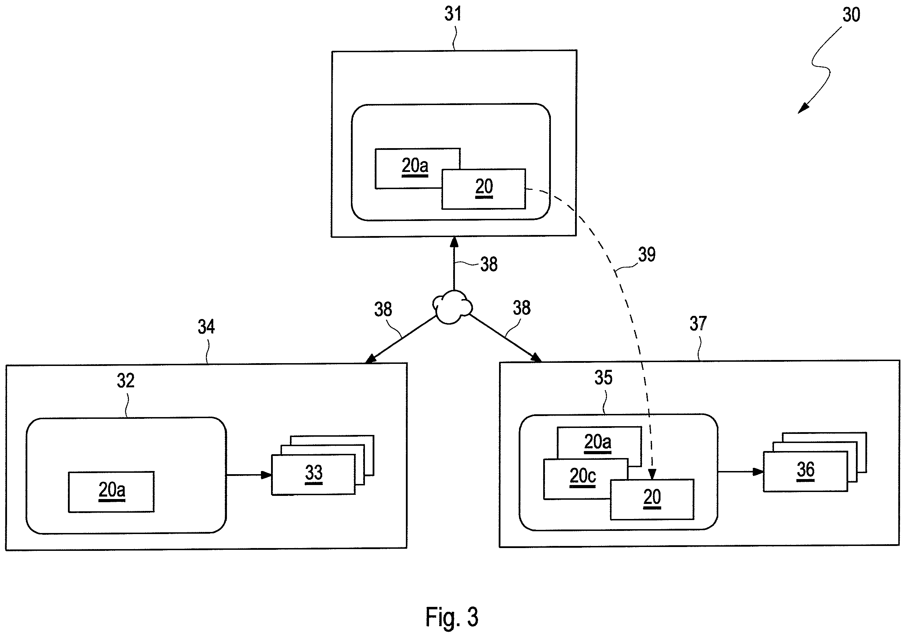

In Figur 3 ist ein Steuerungssystem 30 dargestellt, wie es gemäß der vorliegenden Erfindung ausgeführt sein kann. Das Steuerungssystem umfasst einen Server 31, ein erstes Gateway 32 zur Steuerung von Vorrichtungen 33 in einem ersten Haus 34 und ein zweites Gateway 35 zur Steuerung von Vorrichtungen 36 in einem zweiten Haus 37.

Um die Vorrichtungen 33 und 36, die bspw. als Heizungen ausgestaltet sind, zu steuern, kann der Server 31, solange bspw. eine Internetverbindung besteht und/oder solange es für eine Funktionalität der Applikationen 20a und 20c förderlich ist, die Vorrichtungen 33 und 36 zentral steuern. Für eine spätere ggf. vorzunehmende lokale Ausführung der Applikationen 20a und 20c, können die Applikationen 20a und 20c ferner auf die Gateways 32 und 35 über das Internet, wie durch Pfeile 38 angedeutet, übertragen werden. Kommt es zu einer Änderung der Funktionalität des Gesamtsystems, wie bspw. einer Bandbreitenveränderung der Internetverbindung, ist es für die Funktionalität der Applikationen 20a und 20c ggf. förderlich, dass diese lokal ausgeführt werden. Entsprechend führt ein derartiges Ereignis, vorzugsweise automatisch, zu einer Übertragung der Applikationen 20a und 20c auf die Gateways 32 und 35 (falls dies nicht bereits im Vorfeld geschehen ist) und zu deren Aktivierung. Wahlweise, d. h. in Abhängigkeit von Anforderungen einer jeweiligen Funktionalität der Applikationen 20a und 20c werden die Applikationen 20a und 20c auf ein jeweiliges Gateway 32 oder 35 übertragen und dort ausgeführt, so dass die Applikationen 20a und 20c entsprechende Steuerungssignale zur Steuerung der Vorrichtungen 33 und 36 erzeugen.

Die direkte Übertragung, wie sie durch Pfeil 39 angedeutet ist, kann bspw. in Abhängigkeit einer Übertragungsregel, bspw. in Abhängigkeit einer Verbindungsqualität oder als Vorinstallation, d. h. unabhängig von einer aktuellen Situation des Servers 31 oder des Gateways 35 erfolgen. Sobald die Applikation 20 auf das Gateway 35 übertragen ist, kann diese auf dem Gateway 35 ausgeführt werden. Es ist vorgesehen, dass die Ausführung der Applikation 20 auf dem Gateway 35 in Abhängigkeit mindestens einer, insbesondere durch die Applikation 20 selbst definierten Verwaltungsregel erfolgt. Dies bedeutet, dass bspw. durch die Applikation 20 in einer Verwaltungsregel definiert sein kann, dass bei einem potentiellen Einbruch an einem Gebäude die Applikation 20 auf das von dem Gebäude umfasste Gateway 35 gemäß einer Übertragungsregel übertragen, dort ausgeführt und zur Steuerung der Vorrichtungen 36, bspw. in Form einer Alarmsirene, verwendet wird. Dies bedeutet, dass die Applikation 20 an dem Ort ausgeführt wird, der für die Funktionalität der Applikation 20 am besten geeignet ist. Da ein Einbrecher ggf. eine Kommunikationsverbindung zur Außenwelt unterbrechen kann, ist eine Ausführung der Applikation auf dem lokalen Gateway 35 vorteilhaft. Ferner können Verwaltungsregeln Funktionalitäten der Applikation 20 auch unabhängig von einer Übertragung, d. h. unabhängig von einem Migrationsvorgang, regeln.

Ferner ist denkbar, dass die Applikation 20a von dem Gateway 35 an den Server 31 und/oder das Gateway 32, unter Beibehaltung von in dem zweiten Haus 37 vorgenommenen Einstellungen, übertragen wird, so dass der Server 31 oder das Gateway 32 des ersten Hauses 34 die Vorrichtung 33 bzw. das Gateway 35 des zweiten Hauses 37 die Vorrichtung 36 mittels der Applikation 20a steuert. Die Applikation 20a kann bspw. in Abhängigkeit von Biosignalen eines Nutzers auf eine aktuelle Raumtemperatur über Vorrichtung 33 bzw. 36 einwirken.

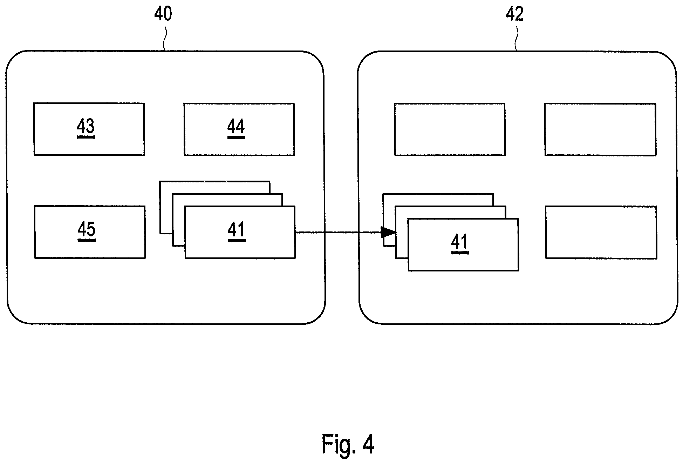

Figur 4 zeigt einen Ablauf eines Übertragungsprozesses einer Applikation 41 zwischen einem Quellsystem 40 und einem Zielsystem 42.

Bei einer Übertragung der Applikation 41 migriert die Applikation 41 von dem Quellsystem 40 weg und zu dem Zielsystem 42 hin. Bei dem Quellsystem 40 kann es sich bspw. um einen zentralen Server handeln. Das Zielsystem 42 kann bspw. ein Gateway sein. Der Migrationsvorgang wird durch verschiedene Komponenten von Quellsystem 40 und Zielsystem 42 verwaltet.

Eine übergeordnete Übertragungsverwaltungsinstanz (migration manager) 43 des Quellsystems 40 orchestriert alle Verfahrensschritte rund um die Übertragung der Applikation 41. Dabei wird die Übertragungsverwaltungsinstanz 43 von einer Übertragungsregelverwaltungsinstanz (migration rule engine) 44 über eine ggf. auftretende und in einer Übertragungsregel spezifizierte Notwendigkeit zur Übertragung gemäß der bspw. durch einen Nutzer vorgegebenen Übertragungsregel informiert. Über eine Anfrage an eine Topologieverwaltungsinstanz (Topologie manager) 45, die alle für die Applikation 41 potentiellen Zielsysteme kennt, definiert die Übertragungsverwaltungsinstanz 43 das Zielsystem 42 und führt die Übertragung der Applikation 41, d. h. einen entsprechenden Datentransfer durch.

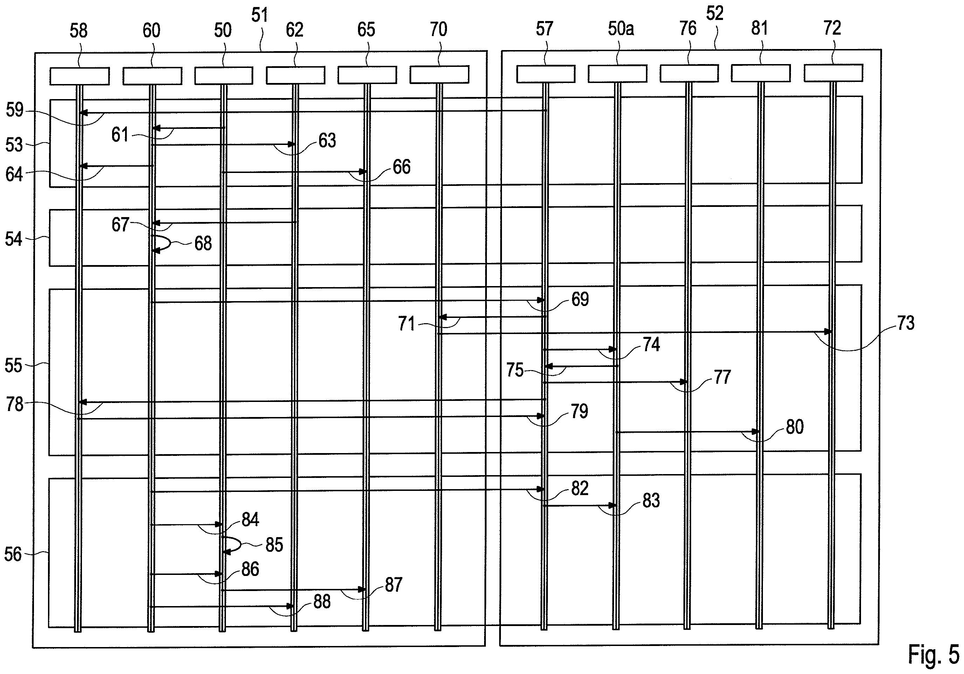

In Figur 5 ist ein Verfahren zum Übertragen einer Applikation 50 von einem Quellsystem 51, wie bspw. einem Verwaltungsserver zu einem Zielsystem 52, das als Gateway ausgeführt sein kann, dargestellt. Das Quellsystem 51 und das Zielsystem 52 können zusammen bspw. ein Gebäudeüberwachungssystem realisieren. In einem ersten Verfahrensschritt 53, der zeitlich und unabhängig von weiteren Verfahrensschritten 54, 55 und 56 ablaufen kann, registriert sich zunächst eine Übertragungsverwaltungsinstanz 57 des Zielsystems 52 bei einer Topologieverwaltungsinstanz 58, wie es durch Pfeil 59 veranschaulicht ist. Die Topologieverwaltungsinstanz 58 kann bspw. auf dem Quellsystem 51 oder jeder weiteren Recheneinheit, die mit dem Zielsystem 52 und dem Quellsystem 51 in Verbindung steht, ausgeführt werden.

Die zu übertragende Applikation 50 wird bei einer Übertragungsverwaltungsinstanz 60 des Quellsystems 51 registriert, wie durch Pfeil 61 angedeutet, woraufhin die Übertragungsverwaltungsinstanz 60 für die Applikation 50 passende und von einem Nutzer vorgegebene Übertragungsregeln an eine Übertragungsregelverwaltungsinstanz 62 des Quellsystems überträgt, wie durch Pfeil 63 veranschaulicht.

Ferner wird während des ersten Verfahrensschritts 53 das Zielsystem 52 durch die Übertragungsverwaltungsinstanz 60 bei der Topologieverwaltungsinstanz 58 identifiziert, wie durch Pfeil 64 veranschaulicht. Ferner werden Verwaltungsregeln zur Verwaltung und Steuerung der Applikation 50 an eine Verwaltungsregelverwaltungsinstanz 65 des Quellsystems übermittelt, wie durch Pfeil 66 dargestellt.

Im zweiten Verfahrensschritt 54 wird anhand von Übertragungsregeln durch die Übertragungsregelverwaltungsinstanz 62 eine Notwendigkeit zur Übertragung, bspw. unter Verwendung einer Sensorik, festgestellt und eine entsprechende Mitteilung an die Übertragungsverwaltungsinstanz 60 übermittelt, wie durch Pfeil 67 dargestellt. Die Übertragungsverwaltungsinstanz 60 fällt anhand der in der Mitteilung enthaltenen Informationen und ggf. weiterer von der Übertragungsverwaltungsinstanz 60 umfassten Informationen eine Entscheidung zur Übertragung der Applikation 50, wie durch Pfeil 68 veranschaulicht. Die Entscheidung zur Übertragung der Applikation 50 kann insbesondere während einer Laufzeit der Applikation 50 auf dem Quellsystem 51 erfolgen.

Im dritten Verfahrensschritt 55 kontaktiert die Übertragungsverwaltungsinstanz 60 des Quellsystems 51 die Übertragungsverwaltungsinstanz 57 des Zielsystems 52, wie durch Pfeil 69 dargestellt, woraufhin die Übertragungsverwaltungsinstanz 57 Software-Artefakte der Applikation 50 aus einem Speicher 70 des Quellsystems 51 abruft, wie durch Pfeil 71 veranschaulicht. Gleichzeitig werden Daten der Applikation 50, d. h. Software-Artefakte der Applikation 50, in einen Speicher 72 des Zielsystems 52 geladen, wie durch Pfeil 73 angedeutet. Die Übertragung der Daten kann bspw. über ein mit dem Internet verbundenes Modem oder jede weitere technisch geeignete Datenschnittstelle erfolgen.

Ferner wird gemäß Pfeil 74 ein Startbefehl zum Starten der Applikation 50 bzw. einer Applikation 50a auf dem Zielsystem 52 durch die Übertragungsverwaltungsinstanz 57 erteilt. Sobald die Applikation 50a auf dem Zielsystem 52 gestartet wurde, registriert sich die Applikation 50a bei der Übertragungsverwaltungsinstanz 57, wie durch Pfeil 75 dargestellt, woraufhin die Übertragungsverwaltungsinstanz 57 entsprechende Übertragungsregeln an eine Übertragungsregelverwaltungsinstanz 76 des Zielsystems 52 gemäß Pfeil 77 übermittelt. Für eine ggf. weitere Übertragung der Applikation 50a kommuniziert die Übertragungsverwaltungsinstanz 57 mit der Topologieverwaltungsinstanz 58 des Quellsystems 51, um weitere Zielsysteme für die Applikation 50a zu identifizieren, wie durch Pfeile 78 und 79 dargestellt. Mit einer Registrierung von durch die Applikation 50 vorgegebenen Verwaltungsregeln der Applikation 50a bei einer Verwaltunsregelverwaltungsinstanz (appliance rule engine) 81 des Zielsystems 52, wie es durch Pfeil 80 angedeutet ist, wird der dritte Verfahrensschritt 55 beendet.

Im vierten Verfahrensschritt 56 werden Rechte bzw. Daten zur Steuerung der Applikation 50 von der Übertragungsverwaltungsinstanz 60 des Quellsystems 51 an die Übertragungsverwaltungsinstanz 57 des Zielsystems 52 übertragen, wie durch Pfeil 82 veranschaulicht, sowie die Steuerung der Applikation 50 aktiviert, wie durch Pfeil 83 verdeutlicht.

Da die Steuerung der Applikation 50 auf die Übertragungsverwaltungsinstanz 57 übertragen wurde, wird die Steuerung der Applikation 50 auf dem Quellsystem 51 gestoppt, wie durch Pfeil 84 gezeigt, wobei noch vorhandene Aufträge ggf. noch abgearbeitet werden, wie durch Pfeil 85 angedeutet, bevor die Applikation 50 schließlich gemäß Pfeil 86 durch die Übertragungsverwaltungsinstanz 60 auf dem Quellsystem 51 deaktiviert wird. Die Applikation 50 de-registriert sich bei der Verwaltungsregelverwaltungsinstanz 65 des Quellsystems 51 und de-registriert ihre Verwaltungsregeln bei der Verwaltungsregelverwaltungsinstanz 65 des Quellsystems 51, wie durch Pfeil 87 angedeutet. Die Übertragungsverwaltungsinstanz 60 de-registriert die Übertragungsverwaltungsregeln der Applikation 50 bei der Übertragungsregelverwaltungsinstanz 62 des Quellsystems, wie durch Pfeil 88 angedeutet.

## Patentansprüche

1. Verfahren zur Steuerung mindestens einer Vorrichtung (33, 36) in mindestens einem Gebäude (34, 37), bei dem die mindestens eine Vorrichtung (33, 36) über mindestens eine von einem Steuerungssystem (30) umfasste Applikation (20a, 20c, 41, 50) angesteuert wird, wobei das Steuerungssystem einen Server (31, 40, 51) und eine Anzahl Gateways (32, 35, 42, 52) umfasst, **dadurch gekennzeichnet, dass** die mindestens eine Applikation (20a, 20c, 41, 50) in Abhängigkeit mindestens einer im Voraus bereitzustellenden Übertragungsregel wahlweise von dem Server (31, 40, 51) zu einem jeweiligen Gateway (32, 35, 42, 52) übertragen und auf dem jeweiligen Gateway (32, 35, 42, 52) zur unmittelbaren Steuerung der mindestens einen Vorrichtung verwendet wird oder umgekehrt von einem jeweiligen Gateway (32, 35, 42, 52) zu dem Server (31, 40, 51) übertragen und auf dem Server zur mittelbaren Steuerung der mindestens einen Vorrichtung (33, 36) verwendet wird, und wobei das jeweilige Gateway (32, 35, 42, 52) über Kabel oder eine Drahtlosschnittstelle mit der mindestens einen Vorrichtung (33, 36) in Verbindung steht.

2. Verfahren nach Anspruch 1, bei dem das Übertragen der mindestens einen Applikation (20a, 20c, 41, 50) zu dem jeweiligen Gateway (32, 35, 42, 52) und/oder eine Verwendung der mindestens einen Applikation zur Steuerung der mindestens einen Vorrichtung (33, 36) dynamisch in Abhängigkeit einer Verwaltungsregel der mindestens einen Applikation (20a, 20c, 41, 50) erfolgt.

3. Verfahren nach Anspruch 2, bei dem die mindestens eine Verwaltungsregel vorsieht, dass die mindestens eine Applikation (20a, 20c, 41, 50) zum Erhalten einer Funktionsfähigkeit des Steuerungssystems (30) in Abhängigkeit eines Ausfalls von einzelnen Komponenten des Steuerungssystems (30) auf das jeweilige Gateway (32, 35, 42, 52) übertragen und dort aktiviert wird.

4. Verfahren nach einem der voranstehenden Ansprüche, bei dem die mindestens eine Applikation (20a, 20c, 41, 50) eine durch einen Nutzer vorgegebene Konfiguration zur Steuerung der mindestens einen Vorrichtung (33, 36) umfasst.

5. Verfahren nach einem der voranstehenden Ansprüche, bei dem die mindestens eine Übertragungsregel vorsieht, dass die mindestens eine Applikation (20a, 20c, 41, 50) in Abhängigkeit einer aktuellen Position eines Nutzers zu einem jeweiligen Gateway (32, 35, 42, 52) übertragen und dort aktiviert wird.

6. Verfahren nach einem der voranstehenden Ansprüche, bei dem für den Fall einer Aktualisierung einer jeweiligen Applikation (20a, 20c, 41, 50) auf dem Server (31, 40, 51), der Server (31, 40, 51) eine aktualisierte Version der jeweiligen Applikation (20a, 20c, 41, 50) automatisch an alle Gateways (32, 35, 42, 52), an die die jeweilige Applikation (20a, 20c, 41, 50) bereits übertragen wurde, überträgt.

7. Verfahren nach einem der voranstehenden Ansprüche, bei dem eine Verwaltungsregelinstanz auf dem Server (31, 40, 51) und/oder dem jeweiligen Gateway (32, 35, 42, 52) jeweilige von jeweiligen Verwaltungsregeln umfasste Parameter überwacht und ggf. eine Entscheidung zum Übertragen der mindestens einen Applikation (20a, 20c, 41, 50) auf das jeweilige Gateway (32, 35, 42, 52) und/oder zum Aktivieren der mindestens einen Applikation (20a, 20c, 41, 50) auf dem jeweiligen Gateway (32, 35, 42, 52) trifft.

8. Verfahren nach einem der voranstehenden Ansprüche, bei dem eine Übertragungsverwaltungsinstanz Anforderungen von verschiedenen Applikationen (20a, 20c, 41, 50) auf einem Server (31, 40, 51) oder einem Gateway (32, 35, 42, 52) gemäß einer jeweiligen durch eine jeweilige Applikation (20a, 20c, 41, 50) vorgegebenen Verwaltungsregel koordiniert.

9. Verfahren nach Anspruch 8, bei dem die Anforderungen der verschiedenen Applikationen (20a, 20c, 41, 50) über eine Priorisierungsregel koordiniert werden.

10. Verfahren nach einem der voranstehenden Ansprüche, bei dem ein zur Übertragung der mindestens einen Applikation (20a, 20c, 41, 50) geeignetes Zielsystem durch eine Verwaltungsinstanz (43) proaktiv in Abhängigkeit von durch ein Topologieprogramm zur Verfügung gestellten Informationen ausgewählt wird.

11. Steuerungssystem mit einem Server (31, 40, 51) und einer Anzahl Gateways (32, 35, 42, 52) zur Steuerung mindestens einer Vorrichtung (33, 36) in mindestens einem Gebäude (34, 37), wobei das Steuerungssystem (30) dazu konfiguriert ist, die mindestens eine Vorrichtung (33, 36) über mindestens eine von dem Steuerungssystem (30) umfasste Applikation (20a, 20c, 41, 50) anzusteuern, **dadurch gekennzeichnet, dass** das Steuerungssystem (30) weiterhin dazu konfiguriert ist, die mindestens eine Applikation (20a, 20c, 41, 50) in Abhängigkeit mindestens einer im Voraus bereitzustellenden Übertragungsregel wahlweise von dem Server (31, 40, 51) zu einem jeweiligen Gateway (32, 35, 42, 52) zu übertragen und die mindestens eine Applikation (20a, 20c, 41, 50) von dem jeweiligen Gateway (32, 35, 42, 52) aus zur unmittelbaren Steuerung der mindestens einen Vorrichtung (33, 36) zu verwenden oder umgekehrt, die mindestens eine Applikation (20a, 20c, 41, 50) von einem jeweiligen Gateway (32, 35, 42, 52) zu dem Server (31, 40, 51) zu übertragen und auf dem Server (31, 40, 51) zur mittelbaren Steuerung der mindestens einen Vorrichtung (33, 36) zu verwenden, und wobei das jeweilige Gateway (32, 35, 42, 52) über Kabel oder eine Drahtlosschnittstelle mit der mindestens einen Vorrichtung (33, 36) in Verbindung steht.

12. Steuerungssystem nach Anspruch 11, wobei das Steuerungssystem (30) auf dem Server (31, 40, 51) und auf einem jeweiligen Gateway (32, 35, 42, 52) je mindestens eine Verwaltungsinstanz (43) zum Verwalten von für eine Übertragung der mindestens einen Applikation (20, 20c, 41, 50) von dem Server (31, 40, 51) zu dem jeweiligen Gateway (32, 35, 42) bzw. eine Übertragung von dem jeweiligen Gateway (32, 35, 42) zu dem Server (31, 40, 51) benötigter Prozesse sowie je eine Übertragungsregelinstanz (60, 57) umfasst, die dazu konfiguriert ist, auf dem Server (31, 40, 51) und/oder dem jeweiligen Gateway (32, 35, 42, 52) jeweilige von jeweiligen Verwaltungsregeln umfasste Parameter zu überwachen und ggf. eine Entscheidung zum Übertragen der mindestens einen Applikation (20a, 20c, 41, 50) auf ein weiteres Gateway (32, 35, 42, 51) gemäß der mindestens einen Übertragungsregel zu treffen und/oder die mindestens eine Applikation (20a, 20c, 41, 52) auf dem jeweiligen Gateway (32, 35, 42, 51) zu aktivieren, und wobei das Steuerungssystem (30) weiterhin auf dem Server (31, 40, 51) und auf dem jeweiligen Gateway (32, 35, 42, 51) je eine Topologieverwaltungsinstanz (58) umfasst, die alle potentiellen Zielsysteme kennt, die für eine Übertragung der mindestens einen Applikation (20a, 20c, 41, 50) in Frage kommen.

## Claims

1. A method for controlling at least one device (33, 36) in at least one building (34, 37), wherein the at least one device (33, 36) is controlled via at least one application (20a, 20c, 41, 50) comprised in a control system (30), wherein the control system comprises a server (31, 40, 51) and a number of gateways (32, 35, 42, 52), **characterized in that**, as a function of at least one transfer rule, which is provided in advance, the at least one application (20a, 20c, 41, 50) is optionally transferred from the server (31, 40, 51) to a particular gateway (32, 35, 42, 52) and is used on the particular gateway (32, 35, 42, 52) for directly controlling the at least one device or, vice versa, is transferred from a particular gateway (32, 35, 42, 52) to the server (31, 40, 51) and is used on the server to indirectly control the at least one device (33, 36), and wherein the particular gateway (32, 35, 42, 52) is connected via a cable or a wireless interface to the at least one device (33, 36).

2. The method according to claim 1, wherein the transfer of the at least one application (20a, 20c, 41, 50) to the particular gateway (32, 35, 42, 52) and/or the use of the at least one application to control the at least one device (33, 36) is carried out dynamically as a function of a management rule of the at least one application (20a, 20c, 41, 50).

3. The method according to claim 2, wherein the at least one management rule provides that, depending on a failure of individual components of the control system (30), in order to maintain functionality of the control system (30), the at least one application (20a, 20c, 41, 50) is transferred to and activated at the particular gateway (32, 35, 42, 52).

4. The method according to any of the preceding claims, wherein the at least one application (20a, 20c, 41, 50) comprises a configuration, predetermined by a user, for controlling the at least one device (33, 36).

5. The method according to any of the preceding claims, wherein the at least one transfer rule provides that the at least one application (20a, 20c, 41, 50) is transferred to and activated at a particular gateway (32, 35, 42, 52) as a function of a current position of a user.

6. The method according to any of the preceding claims, wherein, when a particular application (20a, 20c, 41, 50) is updated on the server (31, 40, 51), the server (31, 40, 51) automatically transfers an updated version of the particular application (20a, 20c, 41, 50) to all gateways (32, 35, 42, 52) to which the particular application (20a, 20c, 41, 50) was previously transferred.

7. The method according to any of the preceding claims, wherein a management rule instance on the server (31, 40, 51) and/or on the particular gateway (32, 35, 42, 52) monitors particular parameters comprised by particular management rules and, if appropriate, makes a decision regarding the transfer of the at least one application (20a, 20c, 41, 50) to the particular gateway (32, 35, 42, 52) and/or the activation of the at least one application (20a, 20c, 41, 50) on the particular gateway (32, 35, 42, 52).

8. The method according to any of the preceding claims, wherein a transfer management instance coordinates requirements of different applications (20a, 20c, 41, 50) on a server (31, 40, 51) or on a gateway (32, 35, 42, 52) in accordance with a particular management rule predetermined by a particular application (20a, 20c, 41, 50).

9. The method according to claim 8, wherein the requirements of the different applications (20a, 20c, 41, 50) are coordinated by way of a prioritisation rule.

10. The method according to any of the preceding claims, wherein a target system suitable for transferring the at least one application (20a, 20c, 41, 50) is proactively selected by a management instance (43) as a function of information provided by a topology program.

11. A control system having a server (31, 40, 51) and a number of gateways (32, 35, 42, 52) for controlling at least one device (33, 36) in at least one building (34, 37), wherein the control system (30) is configured so that it controls the at least one device (33, 36) via at least one application (20a, 20c, 41, 50) comprised in the control system (30), **characterized in that** the control system (30) is in addition configured to transfer, as a function of at least one transfer rule, which is provided in advance, the at least one application (20a, 20c, 41, 50) optionally from the server (31, 40, 51) to a particular gateway (32, 35, 42, 52) and to use the at least one application (20a, 20c, 41, 50) from the particular gateway (32, 35, 42, 52) for directly controlling the at least one device (33, 36) or, vice versa, to transfer the at least one application (20a, 20c, 41, 50) from a particular gateway (32, 35 42, 52) to the server (31, 40, 51) and to use said application on the server (31, 40, 51) to indirectly control the at least one device (33, 36), and wherein the particular gateway (32, 35, 42, 52) is connected via a cable or a wireless interface to the at least one device (33, 36).

12. The control system according to claim 11, wherein the control system (30) comprises, on the server (31, 40, 51) and on a particular gateway (32, 35, 42, 52), in each case at least one management instance (43) for managing the processes necessary for transferring the at least one application (20, 20c, 41, 50) from the server (31, 40, 51) to the particular gateway (32, 35, 42), or for making the transfer from the particular gateway (32, 35, 42) to the server (31, 40, 51), said control system also comprising in each case a transfer rule instance (60, 57) which is configured so as to monitor particular parameters comprised by particular management rules on the server (31, 40, 51) and/or on the particular gateway (32, 35, 42, 52) and, if appropriate, to make a decision regarding the transfer of the at least one application (20a, 20c, 41, 50) to a further gateway (32, 35, 42, 51) according to the at least one transfer rule, and/or to activate the at least one application (20a, 20c, 41, 52) on the particular gateway (32, 35, 42, 51), and wherein the control system (30) in addition comprises on the server (31, 40, 51) and on the particular gateway (32, 35, 42, 51) in each case a topology management instance (58) which knows all the potential target systems that can be considered for transferring the at least one application (20a, 20c, 41, 50).

## Revendications

1. Procédé de commande d'au moins un dispositif (33, 36) dans au moins un bâtiment (34, 37), dans lequel ledit au moins un dispositif (33, 36) est commandé par au moins une application (20a, 20c, 41, 50) comprise dans un système de commande (30), ledit système de commande comprenant un serveur (31, 40, 51) et un certain nombre de passerelles (32, 35, 42, 52), **caractérisé en ce que** ladite au moins une application (20a, 20c, 41, 50) est transmise selon au moins une règle de transmission à fournir au préalable depuis le serveur (31, 40, 51) vers une passerelle respective (32, 35, 42, 52) et utilisée sur ladite passerelle respective (32, 35, 42, 52) pour commander directement ledit au moins un dispositif ou, inversement, est transmise depuis la passerelle respective (32, 35, 42, 52) vers le serveur (31, 40, 51) et utilisée sur le serveur pour commander indirectement ledit au moins un dispositif (33, 36), la passerelle respective (32, 35, 42, 52) étant reliée par câble ou par interface sans fil avec ledit au moins un dispositif (33, 36).

2. Procédé selon la revendication 1, dans lequel la transmission de ladite au moins une application (20a, 20c, 41, 50) vers la passerelle respective (32, 35, 42, 52) et/ou une utilisation de ladite au moins une application pour la commande dudit au moins un dispositif (33, 36) s'effectue de manière dynamique selon une règle d'administration de ladite au moins une application (20a, 20c, 41,50).

3. Procédé selon la revendication 2, dans lequel ladite au moins une règle d'administration prévoit que ladite au moins une application (20a, 20c, 41, 50) soit transmise à la passerelle respective (32, 35, 42, 52) et activée sur celle-ci en fonction d'un défaut de composants individuels du système de commande (30) afin de maintenir le fonctionnement du système de commande (30).

4. Procédé selon l'une des revendications précédentes, dans lequel ladite au moins une application (20a, 20c, 41, 50) comprend une configuration prédé-finie par un utilisateur pour la commande dudit au moins un dispositif (33, 36).

5. Procédé selon l'une des revendications précédentes, dans lequel ladite au moins une règle de transmission prévoit que ladite au moins une application (20a, 20c, 41, 50) soit transmise à une passerelle respective (32, 35, 42, 52) et activée sur celle-ci en fonction d'une position actuelle d'un utilisateur.

6. Procédé selon l'une des revendications précédentes, dans lequel, en cas d'actualisation d'une application respective (20a, 20c, 41, 50) sur le serveur (31, 40, 51), le serveur (31, 40, 51) transmet une version actualisée de l'application respective (20a, 20c, 41, 50) de manière automatique à toutes les passerelles (32, 35, 42, 52) auxquelles l'application respective (20a, 20c, 41, 50) a déjà été transmise.

7. Procédé selon l'une des revendications précédentes, dans lequel une entité chargée des règles d'administration basée sur le serveur (31, 40, 51) et/ou sur la passerelle respective (32, 35, 42, 52) surveille les paramètres compris dans les règles d'administration respectives et, le cas échéant, prend une décision concernant la transmission de ladite au moins une application (20a, 20c, 41, 50) sur la passerelle respective (32, 35, 42, 52) et/ou concernant l'activation de ladite au moins une application (20a, 20c, 41, 50) sur la passerelle respective (32, 35, 42, 52).

8. Procédé selon l'une des revendications précédentes, dans lequel une entité chargée de l'administration des transmissions coordonne les exigences des différentes applications (20a, 20c, 41, 50) sur un serveur (31, 40, 51) ou une passerelle (32, 35, 42, 52), selon une des règles d'administration prédéfinies par l'application respective (20a, 20c, 41, 50).

9. Procédé selon la revendication 8, dans lequel les exigences des différentes applications (20a, 20c, 41, 50) sont coordonnées par le biais d'une règle de hiérarchisation.

10. Procédé selon l'une des revendications précédentes, dans lequel un système cible approprié pour la transmission de ladite au moins une application (20a, 20c, 41, 50) est sélectionnée par une entité d'administration (43) de manière proactive, en fonction de renseignements mis à disposition par un programme de topologie.

11. Système de commande comprenant un serveur (31, 40, 51) et un certain nombre de passerelles (32, 35, 42, 52), permettant de commander au moins un dispositif (33, 36) dans au moins un bâtiment (34, 37), ledit système de commande (30) étant configuré pour commander ledit au moins un dispositif (33, 36) par le biais d'au moins une application (20a, 20c, 41, 50) comprise dans le système de commande (30), **caractérisé en ce que** le système de commande (30) est en outre configuré pour transmettre ladite au moins une application (20a, 20c, 41, 50) selon au moins une règle de transmission à fournier au préalable au choix depuis le serveur (31, 40, 51) vers une passerelle (32, 35, 42, 52) et pour utiliser ladite au moins une application (20a, 20c, 41, 50) depuis la passerelle respective (32, 35, 42, 52) pour commander directement ledit au moins un dispositif (33, 36) ou inversement, pour transmettre ladite au moins une application (20a, 20c, 41, 50) depuis la passerelle respective (32, 35, 42, 52) vers le serveur (31, 40, 51) et pour l'utiliser sur le serveur (31, 40, 51) afin de commander indirectement ledit au moins un dispositif (33, 36), la passerelle (32, 35, 42, 52) respective étant reliée par câble ou par interface sans fil avec ledit au moins un dispositif (33, 36).

12. Système de commande selon la revendication 11, dans lequel le système de commande (30) sur le serveur (31, 40, 51) et sur au moins la passerelle respective (32, 35, 42, 52) comprend au moins une entité d'administration (43) pour gérer les processus nécessaires pour une transmission de ladite au moins une application (20, 20c, 41, 50) depuis le serveur (31, 40, 51) vers la passerelle respective (32, 35, 42) ou pour une transmission depuis la passerelle respective (32, 35, 42) vers le serveur (31, 40, 51), ainsi qu'une entité chargée des règles de transmission (60, 57) configurée pour surveiller les paramètres compris dans les règles d'administration sur le serveur (31, 40, 51) et/ou sur la passerelle respective (32, 35, 42, 52) et, le cas échéant, pour prendre une décision concernant la transmission de ladite au moins une application (20a, 20c, 41, 50) sur une autre passerelle (32, 35, 42, 51) selon ladite au moins une règle de transmission et/ou pour activer ladite au moins une application (20a, 20c, 41, 52) sur la passerelle respective (32, 35, 42, 51), le système de commande (30) comprenant également, sur le serveur (31, 40, 51) et sur la passerelle respective (32, 35, 42, 51), une entité chargée de la gestion de la topologie (58) qui connaît tous les systèmes cibles potentiels envisageables pour une transmission de ladite au moins une application (20a, 20c, 41, 50).
